# EUROPÄISCHE PATENTSCHRIFT

(11) **EP 1 396 510 B1**
(45) Veröffentlichungstag und Bekanntmachung des Hinweises auf die Patenterteilung: **28.06.2006**
(21) Anmeldenummer: 03019326.2
(22) Anmeldetag: 27.08.2003
(51) Int. Cl.: C08G 18/10, C08G 18/28, C08G 18/32, C09D 5/04

(54) **Polymeres Harnstoffurethan als Rheologiesteuerungsmittel und Verfahren zur Herstellung**
Polymeric urea-urethanes as thickener and process for its preparation
Polyurée-uréthane comme agent d'épaississement et procédé pour sa préparation

(30) Priorität: 09.09.2002 DE 10241853
(43) Veröffentlichungstag der Anmeldung: 10.03.2004
(73) Patentinhaber: Byk-Chemie GmbH, 46483 Wesel (DE)
(72) Erfinder: Haubennestel, Karlheinz, 46487 Wesel (DE); Mössmer, Stefan, Dr., 40822 Mettmann (DE); Hübers, Sascha, 46483 Wesel (DE); Gertzen, Bärbel, 46446 Emmerich (DE); Heilmann, Holger, 46485 Wesel (DE)
(74) Vertreter: Leifert & Steffan

(56) Entgegenhaltungen:
- EP-A- 0 007 594
- EP-A- 0 300 388
- WO-A-00/49063
- FR-A- 2 162 015

## Beschreibung

Die Erfindung betrifft polymere Harnstoffurethane in aprotischen, polaren Lösungsmitteln zur Verwendung als Rheologiesteuerungsmittel von flüssigen Polymeren oder Lösungen dieser Polymeren, die als Beschichtungsmittel, Gieß- und Formmassen oder Klebstoffe im weitesten Sinne eingesetzt werden können. Die Erfindung betrifft des Weiteren das Verfahren zur Herstellung dieser polymeren Harnstoffurethane.

Um die Rheologie von flüssigen Polymersystemen zu beeinflussen, werden vorwiegend organisch modifizierte Bentonite, Kieselsäuren, hydriertes Rizinusöl und Polyamidwachse eingesetzt. Nachteilig bei diesen Stoffen ist, dass sie meist trockene Feststoffe darstellen, die mittels Lösungsmitteln und Scherkräften zu einem Halbfabrikat aufgeschlossen, bzw. durch gezielte Temperatursteuerung in das flüssige Polymersystem eingebracht werden müssen. Werden diese Temperaturen nicht eingehalten, treten im fertigen Beschichtungssystem Kristallite auf, die zu Fehlern in der Beschichtung führen können.

Der generelle Nachteil dieser heute eingesetzten rheologischen Hilfsstoffe ist, dass sie zu Trübungen und Schleierbildung (Haze) in klaren, transparenten Beschichtungen führen. Außerdem ist der Umgang mit trockenen, pulverförmigen Produkten, die Stäube in der Verarbeitung verursachen, aus produktionstechnischen und arbeitshygienischen Gründen nicht gewünscht.

Andere Vorschläge zur Rheologiesteuerung werden in der *EP-A-0 198 519*, der *US-A-4 311 622 und US-A-4 677 028* beschrieben, wo Polyisocyanate oder Polyisocyanurate mit Mono- oder Polyaminen in zwingender Anwesenheit eines Bindemittels zu Polyharnstoffen umgesetzt werden. Dieser Polyharnstoff fällt in Form feinster mikrodisperser Kristalle aus und bildet so ein ablaufverhinderndes Bindemittel, das dann als so genanntes "Sag Control Agent" (SCA) angeboten wird.

Die *EP-A-0 435 428* beschreibt Bindemittelsysteme, die rheologiesteuernde Eigenschaften aufweisen, in denen Polyisocyanate mit Polyaminen und Monoaminen in Gegenwart eines filmbildenden carboxylgruppenhaltigen Polymers umgesetzt werden. Die Carboxylgruppen können dann mit Alkali zu den entsprechenden Salzen umgesetzt werden.
Die *US-A-4 882 408* beschreibt ebenfalls viskositätsgesteuerte Polyurethansysteme, die durch Umsetzung von Mono- und/oder Polyaminen mit Mono- und/oder Polyisocyanaten in Anwesenheit von 1 Komponenten Polyurethanbindemittel hergestellt werden.
In den *US-A-4 383 068* und *US-A-3 893 956* werden Verfahren beschrieben, in denen Polyisocyanataddukte aus Monoalkoholen mit Diisocyanaten und ggf. Diisocyanate mit primären und ggf. sekundären Polyaminen in zwingender Gegenwart von Bindemitteln zu Harnstoffaddukten umgesetzt werden und diese Bindemittel dann eine rheologiesteuernde Eigenschaft aufweisen.
In der *US-A-4 261 845* werden Polyharnstoffe zur Verdickung von Ölen beschrieben. Es handelt sich hier um die Umsetzung von alkoxylierten Monoaminen mit Diisocyanaten zum entsprechenden Diharnstoff. Die Öle werden so zu hochviskosen Fetten verdickt.
Die *EP-A-1 152 019* beschreibt thixotropierte, einkomponentige Kleb- und Dichtstoffe, die hergestellt werden, indem die Isocyanate mit vorzugsweise Butylamin in einem reaktiven Trägermaterial, bevorzugt einem Polyol, zu Harnstoff umgesetzt werden.

In allen diesen Ausführungsformen werden Di- oder Polyharnstoffe in einem Bindemittel oder Trägermedium hergestellt. Die rheologiesteuernden Mittel können alleine, ohne diese Trägermedien nicht hergestellt werden und sind somit nur limitiert einsetzbar.

Die *US-A-4 522 986* beschreibt Urethanharnstoffverbindungen, die durch Reaktion eines NCO-terminierten Urethanprepolymers, mit einem Ethanolamin, um so hydroxyharnstoffterminierte Rheologiesteuerungsmittel zu erhalten, hergestellt werden. Diese NCO-terminierten Urethanprepolymeren werden durch Reaktion eines Polyetherpolyols mit einem stöchiometrischen Überschuss eines aliphatischen, cyclischen Polyisocyanats erhalten. Es werden die Urethanharnstoffverbindungen entweder durch Eindampfen als wachsartige Substanzen isoliert oder durch Verdünnen mit z. B. Aceton, die unlöslichen Diharnstoffverbindungen als kristalline Substanzen isoliert, abfiltriert und verworfen und die in Lösung gebliebenen Urethanharnstoffe durch Abdestillieren des Lösemittels als wachsartige Feststoffe isoliert. Nachteilig bei diesem Verfahren ist, dass der stöchiometrische Überschuss des Diisocyanats mit dem Alkanolamin zwar umgesetzt wird, dann aber entfernt und verworfen werden muss, da diese Harnstoffe in Polymerlösungen unlöslich sind und zu Störungen führen würden.

In der *US-A-6 316 540* werden Polyurethanverdicker für wässrige Systeme beschrieben, die aus einem Polymerisationsreaktionsprodukt aus Polyetherpolyol und einem Di- oder Triisocyanat bestehen, welche mit einer linearen di-funktionellen, polaren Endgruppen-Verschlusskomponente umgesetzt werden, und zwar so, dass auf 1 Äquivalent Isocyanat ungefähr die doppelte äquivalente Menge an difunktioneller Endgruppen-Verschlusskomponente eingesetzt werden. Es resultieren hierbei hydrophile mit Endgruppen funktionalisierte Polyurethanverdicker mit Molekulargewichten von ca. 10 000 - ca. 30 000 g/mol. Nachteilig bei diesem Verfahren ist die schwierig zu kontrollierende Reaktion bei der Umsetzung von Di- und Triisocyanaten mit Polyolen. Bekannter Maßen entstehen hierbei leicht Vernetzungsreaktionen, die nur durch sehr starke Verdünnung in geeigneten Lösemitteln verhindert werden können. Diese Lösemittel müssen dann wieder abdestilliert werden und durch geeignete Lösemittel, wie Butylglykol und Wasser ersetzt werden.

Im amerikanischen Patent *US-A-4 314 924* wird ein Verfahren zur Herstellung eines Thixotropiemittels beschrieben, das einige der o. g. Nachteile ausräumt, in dem es Harnstoffurethane beschreibt, die in aprotischen Lösungsmitteln, in Gegenwart von Lithiumsalzen, durch Umsetzung von Isocyanataddukten mit Polyaminen hergestellt werden. Die so hergestellten Produkte weisen jedoch signifikante Nachteile auf, dadurch bedingt, dass durch das Herstellverfahren, keine reinen Monoaddukte verfügbar sind, sondern Mischungen von Monoaddukten und Diisocyanaten entstehen, die dann mit Diaminen zu einer unkontrollierten Kettenverlängerung des Harnstoffurethans führen. Diese Produkte neigen dann zu Ausfällerscheinungen und sind nur unter größten Schwierigkeiten in Lösung zu halten.

In *US-A-6 420 466* wird ein Verfahren zur Herstellung eines Thixotropiemittels beschrieben, das die zuvor beschriebenen Nachteile ausräumt und zu gezielten Harnstoffurethanen führt, die in polaren, aprotischen Lösungsmitteln, zusammen mit Lithiumsalzen, klare, lagerstabile Lösungen bilden. Der Nachteil dieser Produkte liegt darin begründet, dass aufgrund der nun gezielt hergestellten Diharnstoffurethane nur wenige aktive Harnstoffgruppen in das Molekül eingebracht werden können und somit eine limitierte Wirksamkeit dieser Harnstoffurethane gegeben ist. Außerdem ist die nachträgliche Entfernung des stöchiometrischen Überschusses an Diisocyanat durch Vakuumdestillation ein aufwendiges und teueres Verfahren. Das Ziel der vorliegenden Erfindung war es, Rheologiesteuerungsmittel zu finden, die einfach herzustellen sind, und die in den vorgenannten Patentschriften genannten Nachteile nicht aufweisen.

Überraschenderweise zeigte es sich, dass bei der Umsetzung von Isocyanatterminierten Urethanprepolymeren mit Mischungen von Monoaminen und Polyaminen, in bestimmten Verhältnissen zueinander ausgezeichnete Rheologiesteuerungsmittel hergestellt werden können. Die erfindungsgemäßen Rheologiesteuerungsmittel sind polymere Harnstoffurethane, die erhältlich sind durch eine erste Umsetzung eines Diisocyanats mit einem Polyol, wobei das Diisocyanat im Überschuß eingesetzt wird, so dass sich ein beidseitig NCO-terminiertes Urethanprepolymer bildet, welches neben überschüssigem Diisocyanat vorliegt, und anschließender zweiter Umsetzung der Mischung aus dem beidseitig NCO-terminierten Urethanprepolymer und dem überschüssigen Diisocyanat einerseits mit einer Mischung aus einem primären Monoamin und einem primären Diamin andererseits, wobei bezogen auf 100 Äquivalente der Mischung aus primärem Monoamin und primärem Diamin 0,1 bis 45 Äquivalente des Diamins eingesetzt werden, unter der Maßgabe, dass nach der zweiten Umsetzung ein im wesentlichen isocyanatfreies und von dem eingesetzten Monoamin und dem eingesetzten Diamin freies polymeres Harnstoffurethan vorliegt, wobei als Diisocyanat, Polyol, Monoamin und Diamin auch Mischungen von Diisocyanaten, Polyolen, Monoaminen beziehungsweise Diaminen einsetzbar sind. Besondere Ausführungsformen sind in den Unteransprüchen 2 bis 11 aufgeführt. Die erfindungsgemäßen Harnstoffurethanpolymeren werden vorzugsweise in polaren aprotischen Lösemitteln wie z. B. N-Methylpyrrolidon, N-Butylpyrrolidon, N-Cyclohexylpyrrolidon, Dimethylsulfoxid, Dimethylformamid oder Dimethylacetamid ggf. in Gegenwart von löslichen Lithiumverbindungen, wie z. B. Lithiumchlorid oder Lithiumnitrat hergestellt. Es resultieren im wesentlichen klare, bis leicht trübe, viskose Lösungen mit Festkörperanteilen zwischen 10 - 70 %, vorzugsweise 25 - 50 % oder wachsartig erstarrte Lösungen, die durch leichtes Erhitzen auf ca. 40 - 70°C wieder in eine flüssige, applizierbare Form gebracht werden können.

Neben den polymeren Harnstoffurethanen selbst betrifft die Erfindung das Verfahren zur Herstellung der erfindungsgemäßen polymeren Harnstoffurethane. Dem erfindungsgemäßen Verfahren entsprechend wird in einer ersten Umsetzung ein Diisocyanat mit einem Polyol umgesetzt wird, wobei das Diisocyanat im Überschuß eingesetzt wird, so dass sich ein beidseitig NCO-terminiertes Urethanprepolymer bildet, welches neben überschüssigem Diisocyanat vorliegt, und anschließend in einer zweiten Umsetzung die Mischung aus dem beidseitig NCO-terminierten Urethanprepolymer und dem überschüssigen Diisocyanat einerseits, mit einer Mischung aus einem primären Monoamin und einem primären Diamin andererseits, umgesetzt wird, wobei bezogen auf 100 Äquivalente der Mischung aus primärem Monoamin und primärem Diamin 0,1 bis 45 Äquivalente des Diamins eingesetzt werden unter der Maßgabe, dass nach der zweiten Umsetzung ein im wesentlichen isocyanatfreies und von dem eingesetzten Monoamin und Diamin freies polymeres Harnstoffurethan vorliegt, wobei Diisocyanat, Polyol, Monoamin und Diamin auch als Mischungen von Diisocyanaten, Polyolen, Monoaminen beziehungsweise Diaminen einsetzbar sind.. Besondere Ausführungen des Verfahrens sind in den Ansprüchen 13 bis 15 aufgeführt.

Zur Herstellung der Urethanprepolymeren werden Polyole, wie z. B. Polyalkylenpolyole, Polyalkenylpolyole, Polyetherpolyole oder Polyesterpolyole oder gemischte Polyesterpolyetherpolyole mit vorzugsweise 2 Hydroxylendgruppen, im Folgenden Diole genannt, mit einem stöchimetrischen Überschuss an Diisocyanaten zu NCO-terminierten Urethanprepolymeren umgesetzt. Die Herstellung der NCO-terminierten Urethanprepolymeren ist Stand der Technik und wird nach den in der Polyurethanindustrie üblichen Verfahren durchgeführt. Isocyanatterminierte Prepolymere sind bei der BAYER AG z. B. unter der Bezeichnung Desmodur E 22 sowie bei Huntsman Polyurethanes z. B. unter der Bezeichnung Suprasec 1412 im Handel.
Die Funktionalität der NCO-terminierten Urethanpräpolymere ist ≥ 2, bevorzugt zwischen 2 und 3. Funktionalitäten > 2 kommen dadurch zustande, daß je nach Abhängigkeit der Reaktionsbedingungen die NCO-terminierten Urethanpräpolymere auch Allophanatgruppierungen enthalten können, welche durch Reaktion der entstandenen Urethangruppen mit den vorhandenen freien NCO-Einheiten entstehen und somit höhere Funktionalitäten verursachen. Diese Allophanatgruppierungen spalten bei der nachfolgenden Reaktion zwischen Diol/Diisocyanat-Addukt und der Aminmischung wieder in Urethan und freies Isocyanat zurück, welches mit weiterem Amin zu Harnstoffen abreagiert.
Der stöchiometrische Überschuss an Diisocyanat sollte so berechnet sein, dass auf jedes verfügbare Diol-Äquivalent mehr als 2 Äquivalente Isocyanat bei der Reaktion eingesetzt werden, bevorzugt werden zwischen 3 und 10 Äquivalente eingesetzt, ganz besonders bevorzugt zwischen 5 und 7 Äquivalente. Wie dem Fachmann bekannt ist, entstehen bei dieser Reaktion in Abhängigkeit des stöchiometrischen Überschusses an freiem Diisocyanat neben dem Addukt aus 1 Mol Diol und 2 Mol Diisocyanat auch kettenverlängerte höhermolekulare Homologe.

Der nach der Reaktion mit dem Diol nicht umgesetzte Anteil an Diisocyanat wird entgegen der Lehre aus dem amerikanischen Patent *US-A-6 420 466* nicht entfernt, sondern in die Reaktion mit der Mono/Diamin-Mischung in den Polyharnstoffbildungsprozess einbezogen.

Bei der Polyharnstoffbildung aus der Mischung aus Diol/Diisocyanat-Addukt und der Mono/Diamin-Mischung wird so verfahren, daß nach vollständiger Umsetzung kein freies Isocyanat mehr vorhanden ist, d.h. daß auf 1 Äquivalent Diol/Diisocyanat-Addukt 1 Äquivalent der Aminmischung eingesetzt wird, wobei bezogen auf 100 Äquivalente Aminmischung zwischen 0,1 und 45 Äquivalente, bevorzugt zwischen 1 und 35 Äquivalente und ganz besonders bevorzugt zwischen 3 und 25 Äquivalente des Diamins eingesetzt werden.
Wichtig ist, dass alle verfügbaren Isocyanatgruppen umgesetzt sind und nach der Reaktion keine NCO-Gruppen mehr nachweisbar sind. Die Amine sollten ebenfalls so bemessen sein, dass kein wesentlicher Überschuss an freiem Amin nach der Reaktion im Reaktionsgut mehr nachweisbar ist. Geringe Mengen an Triolkomponenten, wie sie als Verunreinigungen bei den Polyolen auftreten können, können bei diesem Prozess toleriert werden. Es ist vorteilhaft eventuell vorhandenes Wasser in den Polyolen vor der Reaktion mit dem Diisocyanat zu entfernen. Die Herstellung der erfindungsgemäßen polymeren Harnstoffurethane kann in einem geschlossenen heiz- und kühlbaren Rührgefäß erfolgen, wobei vorzugsweise die polaren, aprotischen Lösemittel mit den Mono- und Diaminen und ggf. den Lithiumverbindungen vorgelegt werden. Die Lithiumsalze können der Harnstofflösung auch nach der Reaktion zugegeben werden. Sobald die Lithiumsalze gelöst sind, wird das Urethanprepolymer unter Rühren in die Aminlösung gegeben. Die Reaktion ist exotherm und kann durch Kühlen leicht unter Kontrolle gehalten werden. Die Reaktion kann bei Raumtemperatur oder erhöhten Temperaturen bis zur Siedetemperatur des verwendeten Lösemittels durchgeführt werden, vorzugsweise werden Temperaturen zwischen 40 und 80°C angewendet.
Zur Herstellung der erfindungsgemäßen polymeren Harnstoffurethane können Polyether oder Polyesterdiole eingesetzt werden, wie z. B. Polyalkylenoxide, wie Polyethylenglykole, Polypropylenglykole, Polybutylenglykole, Polytetrahydrofurandiole, sowie Polymere aus gemischten Alkylenoxiden, wie z. B. Polyoxyethylen-Polyoxypropylenglykole, wobei die Alkylenoxide statistisch oder in Blockform vorliegen können. Besonders geeignet sind mit Propylenoxid gemischte Polyetherdiole, da diese weniger zum Kristallisieren neigen. Die Polyetherdiole können auch hergestellt werden, indem die Oxalkylierung von linearen oder cyclischen Diolen ausgeht, wie z. B. von 1,4-Butandiol, 1,6-Hexandiol, 1,10-Decandiol, 1,2-Pentandiol, 2,2-Dimethyl-1,3-Propandiol, 2,5-Dimethyl-2,5-Hexandiol, 2-Buten-1,4-Diol, 2-Butin-1,4-Diol, Cyclohexandimethanol und Bisphenol A. Zur Steuerung der Verträglichkeit der polymeren Harnstoffurethane in den Polymeren ist es vorteilhaft, geringe Mengen Styroloxid in die Polyether mit einzupolymerisieren,
wobei dies statistisch oder blockweise geschehen kann. Neben den Polyetherdiolen können auch Polyesterdiole eingesetzt werden, welche bevorzugt durch ringöffnende Polymerisation von Lactonen, wie z. B. ε-Caprolacton und/oder δ-Valerolacton hergestellt werden, aber auch durch Selbstkondensation von Hydroxycarbonsäuren wie z. B. Hydroxystearinsäure oder durch Kondensation aus Dicarbonsäuren und Diolen. Als Ausgangskomponente für die ringöffnende Polyesterbildung können die für die Alkoxilierung geeigneten Diole, wie z. B. 1,4-Butandiol, 1,6-Hexandiol usw. eingesetzt werden. Es ist aber auch möglich, gemischte Polyether/Polyesterdiole einzusetzen, die z. B. hergestellt werden, indem Polyoxyalkylenglykole, wie sie im Vorhergehenden beschrieben sind, als Startkomponenten für die ringöffnende Polymerisation mit den Lactonen verwendet werden. Genauso ist es möglich, umgekehrt zu verfahren und die Polyesterdiole nachträglich zu alkoxilieren. Hier können die bekannten Alkylenoxide, wie Ethylenoxid, Propylenoxid, Butylenoxid und Styroloxid eingesetzt werden. Neben den oben genannten Diolen können auch Polycarbonatdiole eingesetzt werden, welche basierend auf 1,6-Hexandiol oder 1,4-Cyclohexandimethanol bei UBE Industries, Ltd. unter den Bezeichnungen UH-CARB50, UH-CARB100, UH-CARB200, UH-CARB300 bzw. als UC-CARB100 (die Zahlen geben den zehnten Teil des ungefähren Molekulargewichtes wieder) erhältlich sind. Ebenfalls geeignete Polyole, im Sinne der Erfindung, sind z. B. Polybutadiendiole oder deren hydrierte Derivate, welche erhältlich sind von Nippon Soda Co., Ltd. unter der Bezeichnung Nisso Gl-1000, 2000 und 3000 (die Zahlen geben das ungefähre Molekulargewicht der hydrierten Polybutadiendiole an). Dihydroxyfunktionelle Copolymere aus Ethylen und Butylen, welche unter der Bezeichnung Kraton Liquid L-2203 bei Kraton Polymers erhältlich sind, finden ebenfalls Verwendung. Weitere Diole sind darüberhinaus z. B. dihydroxyfunktionelle. Polydialkylsiloxane wie z. B. α,ω-Bis(3-Hydroxypropyl)-Polydimethylsiloxan.

Die Molekulargewichte der verwendeten Diole liegen zwischen 100 und 4 000 g/mol, bevorzugt zwischen 190 und 2 000 g/mol und ganz besonders bevorzugt zwischen 500 und 1 500 g/mol.

Zur Umsetzung dieser zuvor beschriebenen Diole mit Diisocyanaten sind aliphatische, cycloaliphatische und aromatische Diisocyanate alleine oder in Mischungen geeignet. Generell haben diese Isocyanate die Formel

**OCN-R-NCO**

wobei R Arylen, Alkylarylen und Alkylen sein kann. Spezielle Beispiele solcher Diisocyanate sind 1,4-Tetramethylendiisocyanat, 1,6-Hexamethylendiisocyanat, 2,2(4),4-Trimethyl-1,6-Hexamethylendiisocyanat, 1,10-Decamethylendiisocyanat, 1,4,-Cyclohexylendiisocyanat, p-Phenylen-Diisocyanat, m-Phenylen-Diisocyanat, 2,6-Toluendiisocyanat, 2,4-Toluendiisocyanat und deren Mischungen, p- und m-Xylylendiisocyanat, und 4-4',-Diisocyanatodicyclohexylmethan. Bevorzugt werden 4,4'-Diisocyanatodiphenylmethan, 3,3'-Dimethyl-4,4'-Bisphenylendiisocyanat, 3,3'-Dimethyl-Diisocyanatodiphenylmethan und ganz besonders bevorzugt, die Isomerenmischungen 2,4'-und 4-4'-Diisocyanatodiphenylmethan eingesetzt, die z. B. als Isomerenmischung im Verhältnis 55 +/- 5 % 2,4- und > 38,5 % 4,4-Isomere als Desmodur 2460 M der BAYER AG und als Isomerenmischung im Verhältnis 30 % 2,4- und 70 % 4,4-Isomere als Suprasec x 1004 der Fa. Huntsman im Handel sind. Der Vorteil dieser Isomerenmischungen liegt darin begründet, dass diese Produkte flüssig sind und dementsprechend leichter gehandhabt werden können.

Eine große Zahl der im Vorgehenden beschriebenen Polyole und Diisocyanate, ebenso die isocyanat terminierten Addukte, sind bei *Kurt C. Frisch*, *Fundamental Chemistry and Catalysis of Polyurethanes, Seiten 3 - 10 und 12 - 18* beschrieben.
Bei der weiteren Umsetzung der NCO-terminierten Diole zu den erfindungsgemäßen polymeren Harnstoffurethanen werden, wie zuvor beschrieben, Mischungen von primären Monoaminen und primären Diaminen eingesetzt. Bei den Monoaminen handelt es sich um aliphatische, araliphatische und aromatische Amine. Bei den aliphatischen Aminen werden lineare, verzweigte oder cyclische Amine der Kettenlänge C2 - C8 eingesetzt, wie z. B. Ethylamin, Propylamin, Isopropylamin, Butylamin, sek.- und tert.-Butylamin, 3-Methyl-1-butanamin, Hexylamin, 2-Ethylhexylamin, Octylamin, Cyclopentylamin und Cyclohexylamin. Bei den araliphatischen Aminen handelt es sich um Produkte, wie z. B. Benzylamin, 1- und 2-Phenylethylamin, 4-Methoxyphenylethylamin, β-(3,4-Dimethoxyphenyl)ethylamin, 1-Methyl-3-Phenylpropylamin und Furfurylamin. Bevorzugt ist Phenylethylamin, besonders bevorzugt ist Benzylamin. Bei den aromatischen Aminen handelt es sich im Wesentlichen um Phenylamin, o-Toluidin, 2,6-Xylidin und Benzoesäurehydrazid. Ausgeschlossen sind die hydroxyfunktionellen Monoamine.

Bei den Diaminen handelt es sich um aliphatische, araliphatische und aromatische primäre Diamine, wie z. B. Hydrazin und dessen Derivate wie z. B. Oxalsäuredihydrazid, Bernsteinsäuredihydrazid, Adipinsäuredihydrazid und Terephthalsäuredihydrazid, Ethylendiamin, Neopentandiamin, 1,2- und 1,3-Propandiamin, 1,6-Hexamethylendiamin, 1,8-Octamethylendiamin, 1,12-Dodecamethylendiamin, Cyclohexyldiamin, 4,4'-Diaminodicyclohexylmethan, 3,3'-Dimethyl-4,4'-Diaminodicyclohexylmethan, Isophorondiamin, 4,7-Dioxadecan-1,10-diamin, 4,7,10-Trioxadecan-1,13-diamin, Polyoxyalkylendiamine mit einem zahlenmittleren Molekulargewicht zwischen 148 und 400 g/mol, p- und m-Xylylendiamin, 4,4'-Diaminodiphenylmethan und 3,3'-Dimethyl-4,4'-Diaminodiphenylmethan. Bevorzugt ist m-Xylylendiamin, ganz besonders bevorzugt ist p-Xylylendiamin. Die Monoamine können als Mischungen eingesetzt werden, ebenso wie die Diamine.

Darüberhinaus kann neben der Monoamin/Diamin-Mischung auch anteilmäßig Wasser eingesetzt werden, da sich intermediär aus dem Diisocyanat das entsprechende Diamin bildet, welches mit weiteren, noch vorhandenen Isocyanatgruppen zu den Polyharnstoffen abreagiert.

Als Lithiumsalze können LiCl oder LiNO₃ eingesetzt werden, bevorzugt aber LiNO₃. Der Feststoffgehalt der so erzeugten Harnstoffurethanlösungen beträgt 5-80 %, bevorzugt 20-60 %, besonders bevorzugt 25-50 %. Die Umsetzung der NCO-Präpolymeren mit der Monoamin/Diamin-Mischung erfolgt in einem polaren aprotischen Lösemittel, wie z.B. Dimethylsulfoxid, N,N-Dimethylformamid, N,N-Dimethylacetamid, N-Methylpyrrolidon, N-Butylpyrrolidon oder vergleichbaren Alkylpyrrolidonen.
Der Anteil an Lithiumverbindungen beträgt 0,2-2 Mol, vorzugsweise 0,5-1,5 Mol, besonders bevorzugt 0,6-1 Mol bezogen auf das Aminäquivalent der eingesetzten Monoamin/Diamin-Mischung.

Die so hergestellten Harnstoffurethane enthalten weder freie Isocyanat- noch freie Amingruppen. Sie sind dementsprechend physiologisch unbedenklich. Des weiteren treten keine negativen Nebenreaktionen mit Bindemitteln oder Füllstoffen auf. Die Lagerstabilität dieser so hergestellten Harnstoffurethanlösungen ist hoch und beträgt bei normaler Lagertemperatur durchaus 6 Monate oder mehr.

Die erfindungsgemäßen polymeren Harnstoffurethane finden Verwendung als Rheologiesteuerungsmittel in flüssigen Polymersystemen. Zu den erfindungsgemäßen Anwendungen als Rheologiesteuerungsmittel gehören insbesondere die in den Ansprüchen 17 und 18 genannten Einsatzzwecke. Diese Polymersysteme können Lösemittel enthalten, die aber auch reaktiv sein können und beim Aushärteprozess der Polymerlösungen mit in das Polymersystem eingebaut werden.

Unter flüssigen Polymersystemen sollen Zubereitungen verstanden werden, die im ungehärteten Zustand flüssig oder pastös sind und nach der Applikation oder sonstiger Verarbeitung durch meist thermische Verfahren aber auch anderen Mechanismen, wie z. B. radikalischer Copolymerisation oder Polyaddition in einen festen Zustand übergeführt werden können. Dies sind z. B. Lacke, Nagellacke, Fussbodenbeschichtungsmittel, Formmassen, Laminierharze, Klebstoffe, Dichtungsmassen, Fugenverguss- und Spachtelmassen, PVC-Plastisole und Druckfarben.
Alle diese Systeme haben die Eigenschaft an senkrechten Flächen abzulaufen, in z. B. Gewebeträger tief einzudringen oder bei Verklebungen, keine punktuellen Klebestellen zu ermöglichen. Füllstoffe und Pigmente, wie z. B. CaCO₃, Al(OH)₃, Mg(OH)₂, Quarzmehl, Fe₂O₃, CrO₂, TiO₂, Glimmer usw. setzen in solchen flüssigen Systemen stark ab und lassen sich nur schwer wieder aufrühren. Leichte Füllstoffe, wie z. B. Hohlglaskugeln, steigen nach oben und separieren aus dem System. Bei allen diesen Systemen ist es notwendig rheologische Mittel anzuwenden, um diese Nachteile auszuräumen.
Lacke bzw. Überzugsmittel im Sinne der Erfindung sind solche, welche aus flüssiger Phase auf ein Substrat aufgetragen werden und unter Ausbildung eines Filmes, eine schützende oder funktionelle und/oder dekorative Oberfläche ausbilden. Unter Substraten sollen z. B. Holz, Metalle, Kunststofffolien, Kunststoffteile, Papier, Leder, Finger- und Fußnägel und Baustoffe, wie z. B. Mauerwerk, Beton und Putze verstanden werden. Es kann sich um unpigmentierte, pigmentierte und Farbstoffe enthaltende Lacke handeln, die wiederum verschiedene Arten von Bindemitteln enthalten können, alleine oder in Mischung, wie z. B. ungesättigte oder gesättigte Polyesterharze, Epoxydharze, Polyurethanharze, Acrylat- und Methacrylatharze, Acrylat-Aminoplastharze, Acrylat-Isocyanatharze, Nitrocellulose, Celluloseacetobutyrat, Alkyd-Aminoplastharze, Alkydharze, Melaminharze, Harnstoffharze, Silikonharze usw. Als Lösungsmittel können diese Lacke organische Lösungsmittel und/oder Weichmacher, wie z. B. Ester, Ketone, Aromaten, Aliphaten und Alkohole und/oder Wasser enthalten, wie dies gemäß dem Stand der Technik dem Fachmann bekannt ist. Klebstoffe werden sehr häufig mit SiO₂ thixotropiert. Dies dient zur besseren Standfestigkeit an senkrechten Flächen, sowie zur Verhinderung des Abtropfens. Geeignete Bindemittel für solche Klebstoffe sind z. B. Epoxidharze, Polychloropren-Harze, Polyurethanharze (1- und 2-komponentig) und Polyacrylatharze. Auf dem Gebiet der Dichtungsmassen und Fugenvergussmassen werden häufig, z. B. Acrylharze, Butylkautschuk, Polysulfidkautschuk, Epoxidharze und Polyurethane eingesetzt. Auch bei diesen Systemen wird hochdisperses SiO₂ eingesetzt, um eine erhöhte Standfestigkeit und Thixotropie zu erreichen.
Plastisole bestehen im Wesentlichen aus verpastbarem PVC-Pulver oder PVC-Copolymerpulver und gelierenden Weichmachern, wie z. B. Dioctylphthalat, Diisodecylphthalat, Dioctyladipat, Dioctylsebacat, Butylbenzylphthalat und Tricresylphosphat. Durch SiO₂ wird eine Thixotropie aufgebaut, und die Fliessgrenze erhöht und somit ein Ablaufen oder ein Durchsacken durch ein textiles Trägergewebe oder anderes Trägermaterial, wie z. B. Glasvlies verhindert. Einsatzgebiete sind z. B. Unterbodenschutz von Fahrzeugen, Dichtungsmassen, Kunstleder, Planen, Fussbodenbeläge und Tauchartikel.
Nagellacke sind ebenfalls interessante Abkömmlinge von üblichen Lacken und haben das gleiche Problem des Absetzens von Pigmenten und müssen daher rheologisch eingestellt werden, ohne daß der Verlauf beim Aufbringen des Lackes auf die Nägel beeinträchtigt wird.
In Druckfarben wird ebenfalls zur Erhöhung der Viskosität oft SiO₂ eingesetzt. Diese Anwendung ist einer herkömmlichen Lackanwendung, wie oben beschrieben sehr ähnlich, besonders was die Pigmentierung, die Lösungsmittel und Bindemittel betrifft, auch hierbei werden z. B. Alkohole, Ester, Ketone, Glykolether, Wasser und Kohlenwasserstoffe als Lösungsmittel eingesetzt. Die Bindemittel werden je nach Verwendungszweck der Druckfarbe ausgewählt, z. B. modifizierte Colophoniumharze, Resinate und Kohlenwasserstoffharze für Tiefdruckfarben oder Polyvinylharze, Acrylharze und Polyamidharze für Verpackungsdruckfarben.
Unter Formmassen werden Massen verstanden, die zu Formkörpern verarbeitet werden, wobei die in den Massen enthaltenen Reaktionsharze in der Regel bei erhöhter Temperatur während der Formgebung zur Reaktion gebracht werden. Formmassen im Sinne der Erfindung sind z. B. solche auf Basis von ungesättigten Polyesterharzen und Vinylharzen, auch in Kombination mit Thermoplasten wie Polystyrol, Polyvinylacetat, Polymethylmethacrylat und Styrol-Butadien-Copolymeren, die als schrumpfreduzierende Anteile den Polyesterharzen zugesetzt werden. Weitere Formmassen sind insbesondere Polyurethane, welche z. B. im Reaktions-Spritzguß-Verfahren eingesetzt werden.
Andere Formmassen können auch auf Basis von Epoxidharzen aufgebaut sein. Diese Epoxidharze werden bevorzugt auf dem Gebiet der Gieß- und Preßmassen eingesetzt. Weitere Formmassen, welche z. B. nach dem Naßpreßverfahren, Injektionsverfahren oder Profilziehverfahren verarbeitet werden können, sind die Phenol-Formaldehyd-Kondensationsharze, welche auch unter dem Begriff Phenolharze bekannt sind.
Die Formmassen im allgemeinen können ebenfalls die gemäß dem Stand der Technik üblichen Zusatzstoffe oder sonstige Bestandteile enthalten. Insbesonders können solche Formmassen Füllstoffe und/oder verstärkende Füllstoffe enthalten, wie z. B. Glasfasern, Kohlenstoff-Fasern und Polyamidfasern, Wollastonite, Silikate, anorganische Carbonate, Aluminiumhydroxid, Bariumsulfat und Kaolin.
Ganz besonders bevorzugt im Sinne der Erfindung ist die Verwendung der erfindungsgemäßen Mittel in Laminierharzen und Feinschichten (Gelcoats). Bei Laminierharzen handelt es sich im Wesentlichen um Systeme, welche im Prinzip dem unter Formmassen gesagten entsprechen, lediglich die Härtung erfolgt in der Regel bei Umgebungstemperatur. Es handelt sich also um kalthärtende Systeme, im Gegensatz zu den zuvor beschriebenen Formmassen. Laminierharze sind z. B. solche auf Basis von ungesättigten Polyesterharzen, Vinylharzen und Epoxidharzen. Diese Laminierharze werden in der Regel verstärkt durch Glasfasern und Kohlenstofffasern und können Füllstoffe wie z. B. Al(OH)₃, CaO₃, Sb₂O₃ sowie andere anorganische und organische Pigmente enthalten, neben anderen für die Verarbeitung notwendigen Hilfsmittel, wie dem Fachmann bekannt ist. Für die Feinschichten (Gelcoats) gilt im Wesentlichen das unter Laminierharz gesagte, wobei wesentliche Unterschiede darin bestehen, dass an die Beständigkeit der Feinschichtharze im Normalfall höhere Anforderungen gestellt werden, besonders was die Wasser- und Witterungsbeständigkeit angeht. Außerdem können diese Feinschichtharze farbgebende Pigmente enthalten, üblicherweise aber keine Verstärkungsstoffe. Diese Feinschichtharze sind im allgemeinen stärker thixotropiert als Laminierharze.

Eine Thixotropierung ist bei diesen Systemen von besonderer Bedeutung, weil einerseits eine gute Penetration der flüssigen Harze in den Schichtaufbau der verstärkenden Fasern erreicht werden soll, andererseits nach einer gewissen Relaxationszeit das Ablaufen der Harze verhindert werden soll. Beim Feinschichtaufbau ist ein guter Verlauf, trotz hoher SiO₂-Anteile notwendig. Dies wird durch eine ausgeprägte Thixotropie erreicht, wie sie erfindungsgemäß im besonderen Maß erreicht wird. In Abhängigkeit vom gegebenen System können durch die zugesetzten Mengen der erfindungsgemäßen polymeren Harnstoffurethane die gewünschten Thixotropie-Effekt applikationsgerecht eingestellt werden, d. h. wie dem Fachmann bekannt ist, ist für unterschiedliche Applikationsverfahren wie z. B. Laminieren, Spritzen oder Wickeln unterschiedliches rheologisches Verhalten notwendig.
Um in den o. g. Systemen den gewünschten Thixotropie-Effekt zu erreichen, werden vorzugsweise den flüssigen Polymersystemen 0,1 - 5 %, bevorzugt 0,25 - 3 %, ganz besonders bevorzugt 0,5 - 1,5 % bezogen auf die Wirksubstanz der erfindungsgemäßen polymeren Harnstoffurethanen zugesetzt.

Der Vorteil der erfindungsgemäßen Rheologiesteuerungsmittel liegt darin begründet, dass sie ohne großen technischen Aufwand den flüssigen Polymersystemen unter mäßigem Rühren zugesetzt werden können und keinerlei mechanischer Aufschlussverfahren bedürfen, wie dies z. B. bei SiO₂ oder Bentoniten erforderlich ist, außerdem handelt es sich hierbei um Flüssigkeiten und nicht um staubende Pulver. Die erfindungsgemäßen Polyharnstofflösungen können den flüssigen Polymersystemen auch nachträglich zugegeben werden. Bei den erfindungsgemäßen Polyharnstoffen handelt es sich außerdem um ausreagierte Systeme, die keine weitere Reaktion mit den teilweise sehr reaktiven Bindemitteln eingehen können. Eine *in situ*-Bildung der Polyharnstoffe, wie z. B. in der *EP-A-0 198 519* beschrieben durch Zusammengeben von Amin und Isocyanat, in Anwesenheit des Bindemittels, scheidet z. B bei ungesättigten Polyesterharzen oder UV-härtbaren Acrylatlacken aus, da die Amine spontan mit den Bindemitteln reagieren.

In den nachfolgenden Beispielen 1 - 24 wird beispielhaft die Herstellung der erfindungsgemäß verwendeten Polyharnstoffe erläutert.

### Herstellung der NCO-Präpolymeren (erfindungsgemäß)

### Beispiel 1

1.2 mol Diphenylmethandiisocyanat (307,3 g) (Suprasec x 1004 ex Huntsman Polyurethanes; NCO-Gehalt= 32,8 %, bestimmt nach DIN EN ISO 9369) werden unter Stickstoffspülung bei Raumtemperatur mit 0.2 mol hydriertem 1,2-Polybutadiendiol (309,5 g) (OH-Zahl = 72,5, OH-Zahl = mg KOH / g Substanz, bestimmt nach DIN / ISO 4629) tropfenweise versetzt. Die Temperatur wird dabei konstant gehalten. Nach beendeter Zugabe wird so lange gerührt, bis der theoretische NCO-Gehalt von 13,6 % erreicht ist.

### Beispiel 2

1.2 mol Diphenylmethandiisocyanat (305,5 g) (Desmodur 2460 M ex BAYER AG; NCO-Gehalt = 33 %) werden unter Stickstoffspülung bei 40°C mit 0.2 mol Polybutadiendiol (181 g) (OHZ = 124) tropfenweise versetzt. Die Temperatur wird dabei konstant gehalten. Nach beendeter Zugabe wird so lange bei T = 40°C gerührt, bis der theoretische NCO-Gehalt von 17,3 % erreicht ist. Anschließend wird der Ansatz auf Raumtemperatur gebracht.

Die Beispiele 3 bis 6 werden analog dem in Beispiel 1 beschriebenen Verfahren und Beispiel 7 nach dem in Beispiel 2 beschriebenen Verfahren hergestellt.

**Präpolymere**

| Beispiel | Diol | NCO-Gehalt [%] | Äquivalent-Gew. [g/val] | Molverhältnis NCO: OH |
|---|---|---|---|---|
| 1 | 1,2-Polybutadiendiol hydriert (OHZ = 72,5) | 13,6 | 308,8 | 6:1 |
| 2 | Polybutadiendiol (OHZ = 124) | 17,3 | 242,8 | 6:1 |
| 3 | Polyesterdiol (OHZ = 107) | 16,2 | 259,2 | 6 :1 |
| 4 | Tripropylenglykol (OHZ = 584) | 22,8 | 184,2 | 5:1 |
| 5 | Polycaprolactondiol (OHZ = 212) | 18,6 | 225,8 | 5:1 |
| 6 | Polypropylenglykol (OHZ = 112) | 15,7 | 267,5 | 5,5:1 |
| 7 | PEO-b-PPO-b-PEO (OHZ = 40) | 8,2 | 512,2 | 5:1 |

### Herstellung der Harnstoffurethane (erfindungsgemäß)

### Beispiel 8

In 337 g N-Methylpyrrolidon werden bei 60°C 20,7 g LiNO₃ und 49,4 g der Aminmischung (Äquivalentgewicht = 98,7 g/val; 44,5 g Benzylamin und 4,9 g 1,6-Diaminohexan) gelöst. Dann werden bei 80°C innerhalb 1 Stunde 154,4 g des unter Beispiel 1 hergestellten NCO-Präpolymeren zudosiert. Nach erfolgter Zugabe wird noch 1 Stunde gerührt und dann auf Raumtemperatur abgekühlt. Die so erhaltene Harnstoffurethanlösung hat einen Feststoffgehalt von 40 Gew.-%. Man erhält ein klares, über längere Zeit stabiles Produkt.

### Beispiel 9

In 231,5 g N,N-Dimethylacetamid werden bei 60°C 14,8 g LiCl und 53,2 g der Aminmischung (Äquivalentgewicht = 106,4 g/val; 49,5 g Benzylamin und 3,7 g 4,4'-Diaminodiphenylmethan) gelöst. Dann werden bei 60°C innerhalb 45 Minuten 121,4 g des unter Beispiel 2 hergestellten NCO-Präpolymeren zudosiert. Nach erfolgter Zugabe wird noch 1 1/2 Stunden gerührt und dann auf Raumtemperatur abgekühlt. Die so erhaltene Harnstoffurethanlösung hat einen Feststoffgehalt von 45 Gew.-%. Man erhält ein klares, über längere Zeit stabiles Produkt.

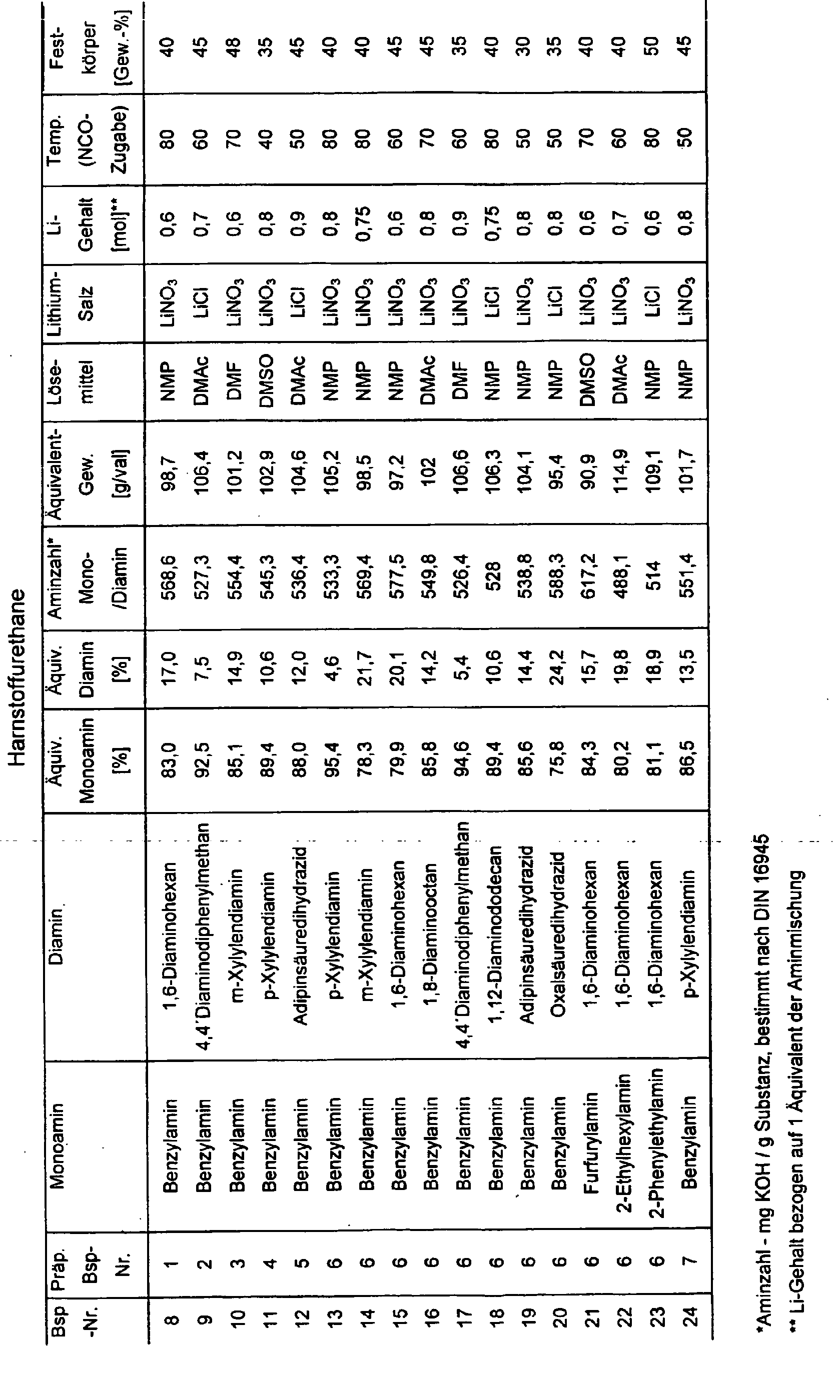

### Anwendungstechnische Ergebnisse

Serie 1: Die erfindungsgemäßen Harnstoffurethane wurden in folgenden Systemen auf ihre Fähigkeit zur Ausbildung von Gelstrukturen untersucht.
1) Macrynal SM 510N: gesättigter Polyester, 60 % angelöst in Xylol
2) Weichmacher: Butylbenzylphthalat, 100 %

1 % bezogen auf die Wirksubstanz eines erfindungsmäßig hergestellten Harnstoffurethans und eines Vergleichsbeispieles aus *US-A-6 420 466* werden durch einfaches Umrühren mit dem Spatel in die Prüfsysteme eingearbeitet. Die Beurteilung erfolgt visuell nach 24 Stunden.

**Tabelle 1**

| Beispiel | Gelstärke in Macrynal SM 510N | Gelstärke in Butylbenzylphthalat (BBP) |
|---|---|---|
| Vgl.-Bsp. aus *US-A- 6 420 466* | 2 | 6 |
| 8 | 1 | 5 |
| 9 | 2 | 5 |
| 10 | 1 | 5 |
| 11 | 1 | 3 |
| 12 | 1 | 5 |
| 13 | 1 | 1 |
| 14 | 1 | 1 |
| 15 | 1 | 4 |
| 16 | 1 | 1 |
| 17 | 1 | 1 |
| 18 | 1 | 1 |
| 19 | 1 | 2 |
| 20 | 1 | 4 |
| 21 | 1 | 3 |
| 22 | 1 | 5 |
| 23 | 1 | 2 |
| 24 | 1 | 2 |

| | | |
|---|---|---|
| 1 feste Struktur | | |
| 2 gelartige Struktur | | |
| 3 starke Struktur | | |
| 4 Struktur | | |
| 5 wenig Struktur | | |
| 6 keine Struktur | | |

Serie 2: Die erfindungsgemäßen Harnstoffurethane wurden in ungesättigten Polyesterharzen auf ihr Stand- und Antiseparationsvermögen hin untersucht. Es wurden folgende UP-Harze verwendet:
Palatal P 4: industriegemäß verdünnt (mit Styrol) auf 58 % Festkörper und vorbeschleunigt mit 1 % Co-Lösung) (DSM)
Palapreg P 18-03: Festkörper = 65 %, 35 % Styrol (DSM)

1,5 % bezogen auf die Wirksubstanz eines erfindungsmäßig hergestellten Harnstoffurethans und eines Vergleichsbeispieles aus *US-A-6 420 466* werden unter moderatem Rühren (Dispermat, 500 upm, 0,75 m/sec) in Palatal P 4 eingerührt. Nach einer Stunde wird der Ablauftest bei 50-500 µm durchgeführt. Dazu wird die Mischung nach Einrühren des Härters (Butanox M 50) mit einem Stufenrakel aufgetragen.
Bewertung: Standvermögen (Schichtdicke) in µm.

0,5 % bezogen auf die Wirksubstanz eines erfindungsmäßig hergestellten Harnstoffurethans und eines Vergleichsbeispieles aus *US-A-6 420 466* werden unter moderatem Rühren (Dispermat, 500 upm, 0,75 m/sec) in das Prüfsystem (100 Teile Palapreg P 18-03; 20 Teile Hohlglaskugeln vom Typ Scotchlite K 37) eingebracht. Die Proben werden in verschliessbare, Glaszylinder umgefüllt (⌀ =3 cm) und fünf Tage bei 50°C gelagert.
Bewertung: Höhe der Flüssigkeitssäule (in cm) als Maß für die Antiseparationseigenschaften:
0 cm: hervorragende Stabilisierung, homogene Probe, kein Aufschwimmen der Hohlglaskugeln

### 2 cm: Stabilisierung nicht ausreichend, Hohlglaskugeln schwimmen auf

**Tabelle 2**

| Beispiel | Gelstärke in UP-Harz Palatal P 4 | Standvermögen in UP-Harz Palatal P 4 | Antiseparationsvermögen in UP-Harz Palapreg P 18-03 |
|---|---|---|---|
| Vgl.-Bsp. aus *US-A-6 420 466* | 1 | 125 µm | 2,0 cm |
| 8 | 1 | 150 µm | 1,2 cm |
| 10 | 1 | 200 µm | 1,8 cm |
| 11 | 1 | 175 µm | 0 cm |
| 13 | 1 | 250 µm | 0 cm |
| 14. | 1 | 200 µm | 0 cm |
| 15 | 1 | 250 µm | 0 cm |
| 16 | 1 | 200 µm | 0 cm |
| 17 | 1 | 200 µm | 0,3 cm |
| 19 | 1 | 175 µm | 1,8 cm |

### Serie 3:

Zielsetzung war die Beseitigung der Sedimentation von Füllstoffen in einer Epoxydharzmasse für den Elektrogiessharzbereich.

0,5 % bezogen auf die Wirksubstanz eines erfindungsmäßig hergestellten Harnstoffurethans und eines Vergleichsbeispieles aus *US-A-6 420 466* werden bei 930 upm (1,5 m/sec) am Dissolver während 1 min in ein Epoxysystem (25 Teile Epoxydharz Ruetapox VE 4518 K.A; 9 Teile o-Kresylglycidylether Ruetapox EPD KR; 44 Teile Quarzmehl W12 EST und 22 Teile Aluminiumhydroxid Martinal ON 310, alle Komponenten ex Bakelite AG) eingearbeitet.
100 Teile dieses gefüllten Systems werden nach einer Standzeit von 24 Stunden mit 20 Teilen eines Epoxidharzhärters (Ruetapox VE 4518 K.B ex Bakelite AG) und 0,3 Teilen Benzyldimethylamin (Ruetapox BDMA ex Bakelite AG) 2 min bei 930 upm am Dissolver gemischt. Dieses Gemisch wird in einen PE-Becher abgefüllt und 2 Stunden bei 95°C gehärtet. Aus dem ausgehärteten Körper wird jeweils unten und oben eine 1 cm dicke Scheibe abgeschnitten. Ein Teil dieses Probekörpers wird 2 Stunden bei 1000°C verascht, der Füllstoffanteil bestimmt und somit die Sedimentation bewertet.

**Tabelle 3**

| | Gemisch Harz/Härter | |
|---|---|---|
| Additiv | Füllstoffanteil Aushärtung 2 h bei 95°C | |
| | unten | oben |
| 0-Probe | 55,70 % | 42,90 % |
| Vgl.-Beispiel aus *US-A-6 420 466* | 51,20 % | 45,80 % |
| Bsp. 14 (erfindungsgemäß) | 48,20 % | 48,00 % |

Die Werte zeigen, daß auch unter verschärften Aushärtebedingungen mit dem erfindungsgemäß hergestellten Harnstoffurethan eine gleichmäßige Verteilung der Füllstoffe erreicht wird, also keine Sedimentation zu beobachten ist.

## Patentansprüche

1. Polymeres Harnstoffurethan, erhältlich durch eine erste Umsetzung eines Diisocyanats mit einem Polyol,
wobei das Diisocyanat im Überschuß eingesetzt wird, so dass sich ein beidseitig NCO-terminiertes Urethanprepolymer bildet, welches neben überschüssigem Diisocyanat vorliegt, und
anschließender zweiter Umsetzung der Mischung aus dem beidseitig NCO-terminierten Urethanprepolymer und dem überschüssigen Diisocyanat einerseits mit einer Mischung aus einem primären Monoamin und einem primären Diamin andererseits,
wobei bezogen auf 100 Äquivalente der Mischung aus primärem Monoamin und primärem Diamin 0,1 bis 45 Äquivalente des Diamins eingesetzt werden, unter der Maßgabe, dass nach der zweiten Umsetzung ein im wesentlichen isocyanatfreies und von dem eingesetzten Monoamin und dem eingesetzten Diamin freies polymeres Harnstoffurethan vorliegt,
wobei als Diisocyanat, Polyol, Monoamin und Diamin auch Mischungen von Diisocyanaten, Polyolen, Monoaminen beziehungsweise Diaminen einsetzbar sind.

2. Polymeres Harnstoffurethan gemäß Anspruch 1, wobei das Diisocyanat die allgemeine Formel
OCN-R¹-NCO (I)
und/oder das Polyol die allgemeinen Formel (II)
HO-R²-OH (II)
und/oder das Monoamin die allgemeine Formel
R³-NH₂ (III),
und/oder das Diamin die allgemeine Formel (IV)
H₂N-R⁴-NH₂ (IV),
besitzt und wobei
R¹ ein linearer oder verzweigter Alkylenrest mit 1 bis 8 Kohlenstoffatomen, ein cycloaliphatischer Rest, ein Arylen-Rest oder ein Aralkylen-Rest ist, wobei die vorgenannten Reste gegebenenfalls mit C1- bis C4-Alkylgruppen substituiert sind,
R² ein Polyesterrest, Polyetherrest, gemischter Polyester-Polyether-Rest, Polycarbonat-Rest, Polyolefin-Rest ist, wobei ein Teil der in den vorgenannten Verbindungen enthaltenen Polyether gegebenenfalls durch Styroloxid substituiert sind,
R³ ein linearer oder verzweigter Alkylrest mit 2 bis 8 Kohlenstoffatomen, ein Cycloalkyl-Rest, ein Arylen-Rest oder ein Aralkylen-Rest ist, wobei die vorgenannten Reste gegebenenfalls ein oder mehrere Heteroatome enthalten und/oder mit C1- bis C4-Alkylresten und/oder Alkoxyresten substituiert sind oder R³ ein Rest des Typs Aryl-CO-NH- ist,
R⁴ ein linearer oder verzweigter Alkylenrest mit 1 bis 12 Kohlenstoffatomen, ein cycloaliphatischer Rest, ein Polyether-Rest, ein Arylen-Rest oder ein Aralkylen-Rest ist, wobei die vorgenannten Reste gegebenenfalls mit C1- bis C4-Alkylresten substituiert sind oder R⁴ ein Rest des Typs -NH-CO-R⁵-CO-NH- ist, wobei
R⁵ ein linearer Alkylenrest mit 1 bis 8 Kohlenstoffatomen, eine Einfachbindung oder ein Arylenrest ist.

3. Polymeres Harnstoffurethan gemäß Anspruch 1 oder 2 , wobei das beidseitig NCO-terminierte Urethanprepolymer aus n Molekülen des Diisocyanats und n-1 Molekülen des Polyols gebildet ist und n = 2 bis 6, vorzugsweise 2 bis 4 beträgt.

4. Polymeres Harnstoffurethan gemäß einem der Ansprüche 1 bis 3, wobei die Umsetzung der Mischung aus dem beidseitig NCO-terminierten Urethanprepolymer und dem überschüssigen Diisocyanat einerseits, mit der Mischung aus dem primären Monoamin und dem primären Diamin andererseits, in einem polaren aprotischen Lösemittel durchgeführt wird.

5. Polymeres Harnstoffurethan gemäß einem der Ansprüche 1 bis 4, wobei die Umsetzung der Mischung aus dem beidseitig NCO-terminierten Urethanprepolymer und dem überschüssigen Diisocyanat einerseits, mit der Mischung aus dem primären Monoamin und dem primären Diamin andererseits, in Gegenwart eines löslichen Lithiumsalzes durchgeführt wird.

6. Polymeres Harnstoffurethan gemäß einem der Ansprüche 1 bis 5, wobei das Polyol ein Diol ist.

7. Polymeres Harnstoffurethan gemäß Anspruch 6, wobei das Diol ein zahlenmittleres Molekulargewicht von 100 bis 4000 g/mol besitzt.

8. Polymeres Harnstoffurethan gemäß Anspruch 6 oder 7, wobei das Diol aus Verbindungen der Gruppe bestehend aus Polyesterdiolen, Polyetherdiolen, gemischten Polyesterpolyetherdiolen, Polycarbonatdiolen, Polyolefindiolen, Polyoxyethylen-block-Polyoxypropylenglykolen, sowie Derivate der vorgenannten Verbindungen in welchen zusätzlich Styroloxid einpolymerisiert ist oder Mischungen dieser Verbindungen gewählt ist.

9. Polymeres Harnstoffurethan gemäß einem der Ansprüche 1 bis 8, wobei der Überschuß des Diisocyanats gegenüber dem Polyol so berechnet ist, dass pro Polyol-Äquivalent mehr als zwei Diisocyanat-Äquivalente eingesetzt werden.

10. Polymeres Harnstoffurethan gemäß einem der Ansprüche 1 bis 9, wobei die Mischung der ersten Umsetzung bestehend aus beidseitig NCO-terminiertem Urethanprepolymer und überschüssigem Diisocyanat zunächst isoliert wird und die zweite Umsetzung zeitlich getrennt erfolgt, indem die Mischung der ersten Umsetzung zu einer Lösung der Mischung aus primärem Monoamin und primärem Diamin in einem polaren aprotischen Lösungsmittel gegebenenfalls in Gegenwart eines im polaren aprotischen Lösungsmittels gelösten Lithiumsalzes zudosiert wird.

11. Polymeres Harnstoffurethan gemäß einem der Ansprüch 1 bis 10, wobei bezogen auf 100 Äquivalente der Mischung aus primärem Monamin und primärem Diamin 1 bis 35, vorzugsweise 3 bis 25 Äquivalente des Diamins eingesetzt werden.

12. Verfahren zur Herstellung von polymeren Harnstoffurethanen gemäß einem oder mehreren der Ansprüche 1 bis 11, wobei in einer ersten Umsetzung ein Diisocyanat mit einem Polyol umgesetzt wird,
wobei das Diisocyanat im Überschuß eingesetzt wird, so dass sich ein beidseitig NCO-terminiertes Urethanprepolymer bildet, welches neben überschüssigem Diisocyanat vorliegt, und
anschließend in einer zweiten Umsetzung die Mischung aus dem beidseitig NCO-terminierten Urethanprepolymer und dem überschüssigen Diisocyanat einerseits, mit einer Mischung aus einem primären Monoamin und einem primären Diamin andererseits, umgesetzt wird,
wobei bezogen auf 100 Äquivalente der Mischung aus primärem Monoamin und primärem Diamin 0,1 bis 45 Äquivalente des Diamins eingesetzt werden unter der Maßgabe, dass nach der zweiten Umsetzung ein im wesentlichen isocyanatfreies und von dem eingesetzten Monoamin und Diamin freies polymeres Harnstoffurethan vorliegt,
wobei Diisocyanat, Polyol, Monoamin und Diamin auch als Mischungen von Diisocyanaten, Polyolen, Monoaminen beziehungsweise Diaminen einsetzbar sind.

13. Verfahren zur Herstellung von polymeren Harnstoffurethanen gemäß Anspruch 11, wobei
das Diisocyanat die allgemeine Formel
OCN-R¹-NCO (I)
und/oder das Polyol die allgemeinen Formel (II)
HO-R²-OH (II)
und/oder das Monoamin die allgemeine Formel
R³-NH₂ (III)
und/oder das Diamin die allgemeine Formel (IV)
H₂N-R⁴-NH₂ (IV)
besitzt und wobei
R¹ ein linearer oder verzweigter Alkylenrest mit 1 bis 8 Kohlenstoffatomen, ein cycloaliphatischer Rest, ein Arylen-Rest oder ein Aralkylen-Rest ist, wobei die vorgenannten Reste gegebenenfalls mit C1- bis C4-Alkylgruppen substituiert sind,
R² ein Polyesterrest, Polyetherrest, gemischter Polyester-Polyether-Rest, Polycarbonatrest, Polyolefinrest ist, wobei ein Teil der in den vorgenannten Verbindungen enthaltenen Polyether gegebenenfalls durch Styroloxid substituiert sind,
R³ ein linearer oder verzweigter Alkylrest mit 2 bis 8 Kohlenstoffatomen, ein Cycloalkyl-Rest, ein Arylen-Rest oder ein Aralkylen-Rest ist, wobei die vorgenannten Reste gegebenenfalls ein oder mehrere Heteroatome enthalten und/oder mit C1- bis C4-Alkylresten und/oder Alkoxyresten substituiert sind oder R³ ein Rest des Typs Aryl-CO-NH- ist,
R⁴ ein linearer oder verzweigter Alkylenrest mit 1 bis 12 Kohlenstoffatomen, ein cycloaliphatischer Rest, ein Polyether-Rest, ein Arylen-Rest oder ein Aralkylen-Rest ist, wobei die vorgenannten Reste gegebenenfalls mit C1- bis C4-Alkylresten substituiert sind oder R⁴ ein Rest des Typs -NH-CO-R⁵-CO-NH- ist, wobei
R⁵ ein linearer Alkylenrest mit 1 bis 8 Kohlenstoffatomen eine Einfachbindung oder ein Arylenrest ist.

14. Verfahren zur Herstellung von polymeren Harnstoffurethanen gemäß einem der Ansprüche 12 oder 13, wobei die Mischung der ersten Umsetzung bestehend aus beidseitig NCO-terminiertem Urethanprepolymer und überschüssigem Diisocyanat zunächst isoliert wird und die zweite Umsetzung zeitlich getrennt erfolgt, indem die Mischung der ersten Umsetzung zu einer Lösung der Mischung aus primärem Monoamin und primärem Diamin in einem polaren aprotischen Lösungsmittel gegebenenfalls in Gegenwart eines im polaren aprotischen Lösungsmittels gelösten Lithiumsalzes zudosiert wird.

15. Verfahren zur Herstellung von polymeren Harnstoffurethanen gemäß einem der Ansprüche 12 bis 14, wobei bezogen auf 100 Äquivalente der Mischung aus primärem Monamin und primärem Diamin 1 bis 35, vorzugsweise 3 bis 25 Äquivalente des Diamins eingesetzt werden.

16. Verwendung der polymeren Harnstoffurethane aus einem der Ansprüche 1 bis 11 als rheologiesteuernde Mittel in flüssigen Polymersystemen.

17. Verwendung der polymeren Harnstoffurethane gemäß Anspruch 16, wobei die Polymersysteme Lösemittel enthalten, die gegebenenfalls gegenüber dem im Polymersystem gelösten Polymer reaktiv sind.

18. Verwendung der polymeren Harnstoffurethane gemäß einem der Ansprüche 16 oder 17, wobei das Polymersystem ein Überzugsmittel, Fußbodenbeschichtungsmittel, Klebstoff, Laminierharz, Gelcoat, PVC-Plastisol, eine Formmasse, Dichtungsmasse, Fugenvergußmasse, Spachtelmasse oder Druckfarbe ist und gegebenenfalls Füllstoffe und/oder Pigmente und/oder Bindemittel enthält.

## Claims

1. Polymeric urea-urethane obtainable by a first reaction of a diisocyanate with a polyol,
in which the diisocyanate is used in excess to form a doubly NCO-terminated urethane prepolymer in addition to excess diisocyanate, and
followed by a second reaction of the mixture of the doubly NCO-terminated urethane prepolymer and the excess diisocyanate on the one hand with a mixture of a primary monoamine and a primary diamine on the other hand,
in which, based on 100 equivalents of the mixture of primary monoamine and primary diamine, from 0.1 to 45 equivalents of the diamine are used, with the proviso that after the second reaction the polymeric urea-urethane present is substantially free of isocyanate and of the monoamine used and the diamine used,
where as diisocyanate, polyol, monoamine and diamine it is also possible to employ mixtures of diisocyanates, polyols, monoamines and diamines, respectively.

2. Polymeric urea-urethane according to Claim 1, where
the diisocyanate possesses the general formula
OCN-R¹-NCO (I)
and/or the polyol has the general formula (II)
HO-R²-OH (II)
and/or the monoamine has the general formula
R³-NH₂ (III)
and/or the diamine has the general formula (IV)
H₂N-R⁴-NH₂ (IV)
and where R¹ is a linear or branched alkylene radical having 1 to 8 carbon atoms, a cycloaliphatic radical, an arylene radical or an aralkylene radical, the abovementioned radicals being substituted if desired by C1 to C4 alkyl groups,
R² is a polyester radical, polyether radical, mixed polyester-polyether radical, polycarbonate radical or polyolefin radical, some of the polyethers present in the abovementioned compounds being substituted if desired by styrene oxide,
R³ is a linear or branched alkyl radical having 2 to 8 carbon atoms, a cycloalkyl radical, an arylene radical or an aralkylene radical, the abovementioned radicals containing if desired one or more heteroatoms and/or being substituted if desired by C1 to C4 alkyl radicals and/or alkoxy radicals, or R³ is a radical of the type aryl-CO-NH-,
R⁴ is a linear or branched alkylene radical having 1 to 12 carbon atoms, a cycloaliphatic radical, a polyether radical, an arylene radical or an aralkylene radical, the abovementioned radicals being substituted if desired by C1 to C4 alkyl radicals, or R⁴ is a radical of the type -NH-CO-R⁵-CO-NH-, where
R⁵ is a linear alkylene radical having 1 to 8 carbon atoms, a single bond or an arylene radical.

3. Polymeric urea-urethane according to Claim 1 or 2, the doubly NCO-terminated urethane prepolymer being formed from n molecules of the diisocyanate and n-1 molecules of the polyol and n being from 2 to 6, preferably from 2 to 4.

4. Polymeric urea-urethane according to one of Claims 1 to 3, where the reaction of the mixture of the doubly NCO-terminated urethane prepolymer and the excess diisocyanate on the one hand with the mixture of the primary monoamine and the primary diamine on the other hand is conducted in a polar aprotic solvent.

5. Polymeric urea-urethane according to one of Claims 1 to 4, where the reaction of the mixture of the doubly NCO-terminated urethane prepolymer and the excess diisocyanate on the one hand with the mixture of the primary monoamine and the primary diamine on the other hand is conducted in the presence of a soluble lithium salt.

6. Polymeric urea-urethane according to one of Claims 1 to 5, where the polyol is a diol.

7. Polymeric urea-urethane according to Claim 6, where the diol possesses a number-average molecular weight of from 100 to 4000 g/mol.

8. Polymeric urea-urethane according to Claim 6 or 7, where the diol is selected from compounds of the groups consisting of polyester diols, polyether diols, mixed polyester polyether diols, polycarbonate diols, polyolefin diols, polyoxyethylene-*block*-polyoxypropylene glycols, and derivatives of the abovementioned compounds in which additionally styrene oxide has been incorporated by copolymerization, or mixtures of these compounds.

9. Polymeric urea-urethane according to one of Claims 1 to 8, where the excess of the diisocyanate over the polyol is calculated such that more than two diisocyanate equivalents are used per polyol equivalent.

10. Polymeric urea-urethane according to one of Claims 1 to 9, where the mixture of the first reaction, consisting of doubly NCO-terminated urethane prepolymer and excess diisocyanate, is first isolated and the second reaction takes place in temporal separation, the mixture of the first reaction being metered into a solution of the mixture of primary monoamine and primary diamine in a polar aprotic solvent in the presence if desired of a lithium salt dissolved in the polar aprotic solvent.

11. Polymeric urea-urethane according to one of Claims 1 to 10, where based on 100 equivalents of the mixture of primary monoamine and primary diamine from 1 to 35, preferably from 3 to 25, equivalents of the diamine are used.

12. Process for preparing polymeric urea-urethanes according to one or more of Claims 1 to 11, where in a first reaction a diisocyanate is reacted with a polyol,
the diisocyanate being used in excess, so as to form a doubly NCO-terminated urethane prepolymer which is present in addition to excess diisocyanate, and
followed by a second reaction of the mixture of the doubly NCO-terminated urethane prepolymer and the excess diisocyanate on the one hand with a mixture of a primary monoamine and a primary diamine on the other hand,
in which, based on 100 equivalents of the mixture of primary monoamine and primary diamine, from 0.1 to 45 equivalents of the diamine are used, with the proviso that after the second reaction the polymeric urea-urethane present is substantially free of isocyanate and of the monoamine used and the diamine used,
where as diisocyanate, polyol, monoamine and diamine it is also possible to employ mixtures of diisocyanates, polyols, monoamines and diamines, respectively.

13. Process for preparing polymeric urea-urethanes according to Claim 12, where
the diisocyanate possesses the general formula
OCN-R¹-NCO (I)
and/or the polyol has the general formula (II)
HO-R²-OH (II)
and/or the monoamine has the general formula
R³-NH₂ (III)
and/or the diamine has the general formula (IV)
H₂N-R⁴-NH₂ (IV)
and where R¹ is a linear or branched alkylene radical having 1 to 8 carbon atoms, a cycloaliphatic radical, an arylene radical or an aralkylene radical, the abovementioned radicals being substituted if desired by C1 to C4 alkyl groups,
R² is a polyester radical, polyether radical, mixed polyester-polyether radical, polycarbonate radical or polyolefin radical, some of the polyethers present in the abovementioned compounds being substituted if desired by styrene oxide,
R³ is a linear or branched alkyl radical having 2 to 8 carbon atoms, a cycloalkyl radical, an arylene radical or an aralkylene radical, the abovementioned radicals containing if desired one or more heteroatoms and/or being substituted if desired by C1 to C4 alkyl radicals and/or alkoxy radicals, or R³ is a radical of the type aryl-CO-NH-,
R⁴ is a linear or branched alkylene radical having 1 to 12 carbon atoms, a cycloaliphatic radical, a polyether radical, an arylene radical or an aralkylene radical, the abovementioned radicals being substituted if desired by C1 to C4 alkyl radicals, or R⁴ is a radical of the type -NH-CO-R⁵ -CO-NH-, where
R⁵ is a linear alkylene radical having 1 to 8 carbon atoms, a single bond or an arylene radical.

14. Process for preparing polymeric urea-urethanes according to one of Claims 12 or 13, where the mixture of the first reaction, consisting of doubly NCO-terminated urethane prepolymer and excess diisocyanate, is first isolated and the second reaction takes place in temporal separation, the mixture of the first reaction being metered into a solution of the mixture of primary monoamine and primary diamine in a polar aprotic solvent in the presence if desired of a lithium salt dissolved in the polar aprotic solvent.

15. Process for preparing polymeric urea-urethanes according to one of Claims 12 to 14, where based on 100 equivalents of the mixture of primary monoamine and primary diamine from 1 to 35, preferably from 3 to 25, equivalents of the diamine are used.

16. Use of the polymeric urea-urethanes from one of Claims 1 to 11 as rheology control agent in liquid polymer systems.

17. Use of the polymeric urea-urethanes according to Claim 16, the polymer systems comprising solvents which if desired are reactive towards the polymer dissolved in the polymer system.

18. Use of the polymeric urea-urethanes according to one of Claims 16 and 17, where the polymer system is a coating material, floor coating composition, adhesive, laminating resin, gel coat, PVC plastisol, moulding compound, sealant, joint sealing compound, filling compound or printing ink and comprises if desired fillers and/or pigments and/or binders.

## Revendications

1. Polymère urée-uréthane, pouvant être obtenu par une première transformation d'un diisocyanate avec un polyol,
dans lequel le diisocyanate est introduit en excès de sorte qu'un prépolymère uréthanique à terminaison NCO double se forme, lequel est présent avec du diisocyanate en excès, et
une deuxième transformation consécutive du mélange composé du prépolymère uréthanique à terminaison NCO double et du diisocyanate en excès d'une part avec un mélange composé d'une monoamine primaire et d'une diamine primaire d'autre part,
dans lequel 0,1 à 45 équivalents de diamine sont introduits sur la base de 100 équivalents du mélange composé de monoamine primaire et de diamine primaire dans la mesure où un polymère urée-uréthane, pratiquement sans isocyanate et ne comportant pas les monoamine et diamine introduites, est présent après la deuxième transformation,
dans lequel des mélanges de diisocyanates, polyols, monoamines et diamines peuvent aussi être utilisés comme diisocyanate, polyol, monoamine et diamine, respectivement.

2. Polymère urée-uréthane selon la revendication 1, dans lequel le diisocyanate est de formule générale
OCN-R¹-NCO (I)
et/ou le polyol est de formule générale (II)
HO-R²-OH (II)
et/ou la monoamine est de formule générale
R³-NH₂ (III),
et/ou la diamine est de formule générale (IV)
H₂N-R⁴-NH₂ (IV),
où
R¹ est un groupe alkylène linéaire ou ramifié présentant 1 à 8 atomes de carbone, un groupe cycloaliphatique, un groupe arylène ou un groupe aralkylène, dans lequel les groupes mentionnés ci-dessus sont substitués, le cas échéant, par des groupes alkyle C1 à C4,
R² est un groupe polyester, un groupe polyéther, un groupe polyester-polyéther mélangé, un groupe polycarbonate ou un groupe polyoléfine, dans lequel une partie des polyéthers contenus dans les composés mentionnés ci-dessus sont substitués, le cas échéant, par de l'oxyde de styrène,
R³ est un groupe alkyle linéaire ou ramifié présentant 2 à 8 atomes de carbone, un groupe cycloalkyle, un groupe arylène ou un groupe aralkylène, dans lequel les groupes mentionnés ci-dessus contiennent, le cas échéant, un ou plusieurs hétéroatomes et/ou sont substitués par des groupes alkyle C1 à C4 et/ou des groupes alcoxy ou R³ est un groupe du type aryl-CO-NH-,
R⁴ est un groupe alkylène linéaire ou ramifié présentant 1 à 12 atomes de carbone, un groupe cycloaliphatique, un groupe polyéther, un groupe arylène ou un groupe aralkylène, dans lequel les groupes mentionnés ci-dessus sont substitués, le cas échéant, par des groupes alkyle C1 à C4 ou R⁴ est un groupe du type -NH-CO-R⁵-CO-NH-, dans lequel
R⁵ est un groupe alkylène linéaire présentant 1 à 8 atomes de carbone, une liaison simple ou un groupe arylène.

3. Polymère urée-uréthane selon la revendication 1 ou la revendication 2, dans lequel le prépolymère uréthanique à terminaison NCO double est formé de n molécules de diisocyanate et n-1 molécules de polyol et où n = 2 à 6, de préférence 2 à 4.

4. Polymère urée-uréthane selon l'une des revendications 1 à 3, dans lequel la transformation du mélange composé du prépolymère uréthanique à terminaison NCO double et du diisocyanate en excès d'une part est effectuée avec le mélange composé de la monoamine primaire et de la diamine primaire d'autre part, dans un solvant aprotique polaire.

5. Polymère urée-uréthane selon l'une des revendications 1 à 4, dans lequel la transformation du mélange composé du prépolymère uréthanique à terminaison NCO double et du diisocyanate en excès d'une part est effectuée avec le mélange composé de la monoamine primaire et de la diamine primaire d'autre part, en présence d'un sel de lithium soluble.

6. Polymère urée-uréthane selon l'une des revendications 1 à 5, dans lequel le polyol est un diol.

7. Polymère urée-uréthane selon la revendication 6, dans lequel le diol a une masse moléculaire moyenne en nombre de 100 à 4 000 g/mol.

8. Polymère urée-uréthane selon la revendication 6 ou la revendication 7, dans lequel le diol est sélectionné parmi des composés du groupe constitué par des polyesterdiols, polyétherdiols, diols polyester-polyéther mélangés, diols polycarbonate, diols polyoléfiniques, polyoxyéthylène-*bloc*-polyoxypropylène-glycols, ainsi que des dérivés des composés mentionnés ci-dessus dans lesquels de l'oxyde de styrène est en outre incorporé au polymère, ou des mélanges de ces composés.

9. Polymère urée-uréthane selon l'une des revendications 1 à 8, dans lequel l'excédent de diisocyanate par rapport au polyol est calculé de sorte que plus de deux équivalents de diisocyanate soient introduits par équivalent de polyol.

10. Polymère urée-uréthane selon l'une des revendications 1 à 9, dans lequel le mélange de la première transformation composé de prépolymère uréthanique à terminaison NCO double et de diisocyanate en excès est ensuite isolé et la deuxième transformation s'ensuit, séparée dans le temps, tandis que le mélange de la première transformation est ajouté à une solution du mélange composé de monoamine primaire et de diamine primaire dans un solvant aprotique polaire, le cas échéant, en présence d'un sel de lithium dissous dans le solvant aprotique polaire.

11. Polymère urée-uréthane selon l'une des revendications 1 à 10, dans lequel 1 à 35, de préférence 3 à 25 équivalents de diamine sont introduits sur la base de 100 équivalents du mélange composé de monoamine primaire et de diamine primaire.

12. Procédé de production de polymères urée-uréthane selon l'une ou plusieurs des revendications 1 à 11, dans lequel un diisocyanate est transformé avec un polyol au cours d'une première transformation,
dans lequel le düsocyanate est introduit en excès de sorte qu'un prépolymère uréthanique à terminaison NCO double se forme, lequel est présent avec du diisocyanate en excès, et
le mélange composé du prépolymère uréthanique à terminaison NCO double et du diisocyanate en excès d'une part est ensuite transformé au cours d'une deuxième transformation avec un mélange composé d'une monoamine primaire et d'une diamine primaire d'autre part,
dans lequel 0,1 à 45 équivalents de diamine sont introduits sur la base de 100 équivalents du mélange composé de monoamine primaire et de diamine primaire, dans la mesure où un polymère urée-uréthane, pratiquement sans isocyanate et ne comportant pas les monoamine et diamine introduites, est présent après la deuxième transformation,
dans lequel le düsocyanate, le polyol, la monoamine et la diamine peuvent aussi être utilisés sous forme de mélanges de diisocyanates, polyols, monoamines et diamines, respectivement.

13. Procédé de production de polymères urée-uréthane selon la revendication 11, dans lequel
le diisocyanate est de formule générale
OCN-R¹-NCO (I)
et/ou le polyol est de formule générale (II)
HO-R²-OH (II)
et/ou la monoamine est de formule générale
R³-NH₂ (III),
et/ou la diamine est de formule générale (IV)
H₂N-R⁴-NH₂ (IV),
où
R¹ est un groupe alkylène linéaire ou ramifié présentant 1 à 8 atomes de carbone, un groupe cycloaliphatique, un groupe arylène ou un groupe aralkylène, dans lequel les groupes mentionnés ci-dessus sont substitués, le cas échéant, par des groupes alkyle C1 à C4,
R² est un groupe polyester, un groupe polyéther, un groupe polyester-polyéther mélangé, un groupe polycarbonate ou un groupe polyoléfine, dans lequel une partie des polyéthers contenus dans les composés mentionnés ci-dessus sont substitués, le cas échéant, par de l'oxyde de styrène,
R³ est un groupe alkyle linéaire ou ramifié présentant 2 à 8 atomes de carbone, un groupe cycloalkyle, un groupe arylène ou un groupe aralkylène, dans lequel les groupe mentionnés ci-dessus contiennent, le cas échéant, un ou plusieurs hétéroatomes et/ou sont substitués par des groupes alkyle C1 à C4 et/ou des groupes alcoxy ou R³ est un groupe du type aryl-CO-NH-,
R⁴ est un groupe alkylène linéaire ou ramifié présentant 1 à 12 atomes de carbone, un groupe cycloaliphatique, un groupe polyéther, un groupe arylène ou un groupe aralkylène, dans lequel les groupes mentionnés ci-dessus sont substitués, le cas échéant, par des groupes alkyle C1 à C4 ou R⁴ est un groupe du type -NH-CO-R⁵-CO-NH-, dans lequel
R⁵ est un groupe alkylène linéaire présentant 1 à 8 atomes de carbone, une liaison simple ou un groupe arylène.

14. Procédé de production de polymères urée-uréthane selon l'une des revendications 12 ou 13, dans lequel le mélange de la première transformation composé de prépolymère uréthanique à terminaison NCO double et de diisocyanate en excès est d'abord isolé et la deuxième transformation s'ensuit, séparée dans le temps, tandis que le mélange de la première transformation est ajouté à une solution du mélange composé de monoamine primaire et de diamine primaire dans un solvant aprotique polaire, le cas échéant, en présence d'un sel de lithium dissous dans le solvant aprotique polaire.

15. Procédé de production de polymères urée-uréthane selon l'une des revendications 12 à 14, dans lequel 1 à 35, de préférence 3 à 25 équivalents de diamine sont introduits sur la base de 100 équivalents du mélange composé de monoamine primaire et de diamine primaire.

16. Utilisation des polymères urée-uréthane selon l'une des revendications 1 à 11 comme agent de régulation des propriétés rhéologiques dans des systèmes polymères fluides.

17. Utilisation des polymères urée-uréthane selon la revendication 16, dans laquelle les systèmes polymères contiennent des solvants qui réagissent, le cas échéant, au polymère dissous dans le système polymère.

18. Utilisation des polymères urée-uréthane selon l'une des revendications 16 ou 17, dans laquelle le système polymère est un agent d'enrobage, un agent de revêtement de plancher, un adhésif, une résine pour stratifiés, un enduit gélifié, un plastisol PVC, un matériau de moulage, un matériau de garniture, un matériau d'étanchéité de joints, un enduit ou de l'encre d'imprimerie et contient, le cas échéant, des matériaux de remplissage et/ou des pigments et/ou des liants.
